# DEMANDE DE BREVET EUROPEEN

(11) **EP 0 911 227 A1**
(43) Date de publication de la demande: **28.04.1999**
(21) Numéro de dépôt: 98460044.5
(22) Date de dépôt: 20.10.1998
(51) Int. Cl.: B60R 22/22, B60R 22/26

(54) **Equipement de sécurité pour passagers de véhicule automobile**

(30) Priorité: 23.10.1997 FR 9713295
(71) Demandeur: Wagon Automotive, 79302 Bressuire Cédex (FR)
(72) Inventeur: Chauvin, René, 79300 Bressuire (FR)
(74) Mandataire: Vidon, Patrice

(57) **Abrégé**

L'invention concerne un équipement de sécurité pour passager d'un véhicule automobile comportant un siège (1) avec une assise (2) et un dossier (3), au moins un rail (7, 8) solidaire du plancher du véhicule, au moins un coulisseau (4, 5) monté réglable en position le long du rail (7, 8) et possédant des moyens de fixation démontables du siège (1), une ceinture de sécurité (9) comprenant au moins une sangle ventrale (10.1) dont les extrémités sont reliées au moins indirectement au plancher du véhicule de chaque côté de l'assise du siège et au moins une sangle pectorale (10.2) s'étendant depuis la sangle ventrale (10.1) jusqu'à un point d'attelage solidaire du véhicule. Le point d'attelage de la sangle pectorale (10.2) est porté par une navette (5) logée à coulissement dans le rail (8) susdit à l'arrière du coulisseau (5).

## Description

La présente invention concerne la sécurité des passagers dans les véhicules automobiles et plus particulièrement un équipement de sécurité pour les passagers d'un véhicule dit "monospace" dans lequel l'arrangement des sièges des passagers est modifiable par l'utilisateur.

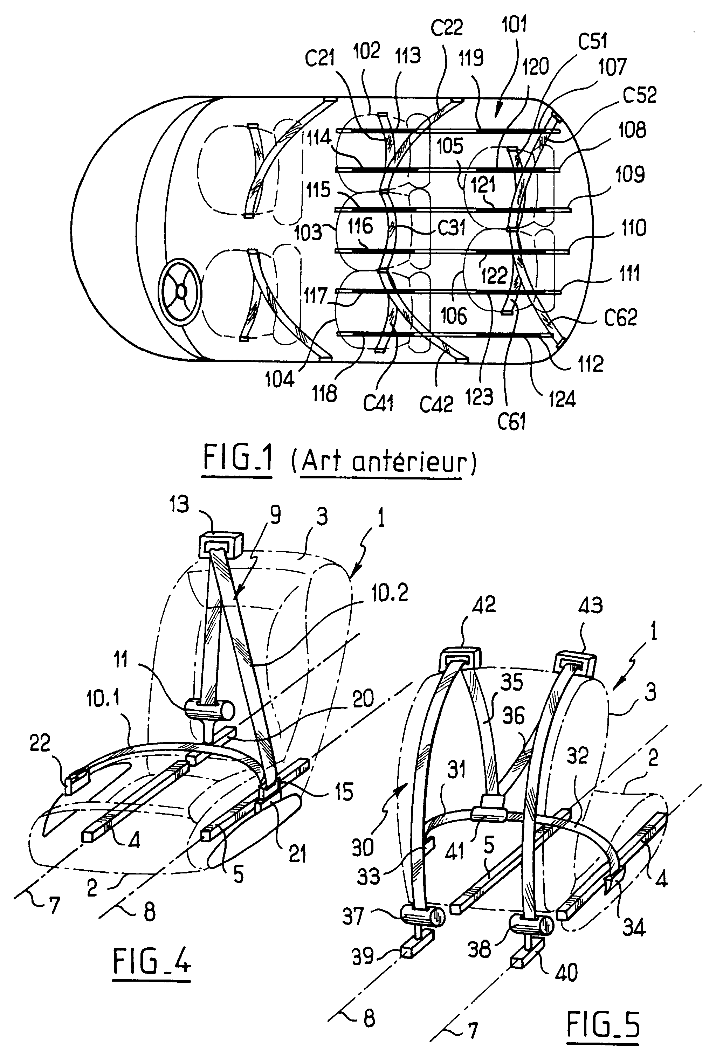

Un exemple de ce type de véhicule est représenté schématiquement, vu de dessus, à la figure 1. La partie arrière 101 de l'habitacle est prévue pour recevoir un certain nombre de sièges (ici cinq) référencés de 102 à 106 sur la figure, ce de manière réglable et amovible afin que l'utilisateur puisse disposer d'une certaine liberté d'aménagement de ce volume en fonction des diverses utilisations qu'il souhaite de son véhicule.

L'adaptation de cet aménagement est rendue possible par la présence dans ou sur le plancher du véhicule (au moins de sa partie arrière) d'un certain nombre de rails parallèles 107 à 112 qui contiennent des coulisseaux 113 à 124, réglables (et verrouillables) en diverses positions le long des rails.

Chaque coulisseau est pourvu en partie supérieure, accessibles par le dessus, de moyens pour coopérer à la fixation démontable des sièges, ce dans le sens de la marche avant du véhicule ou dans une orientation différente. Lorsqu'un ou plusieurs sièges sont retirés, les coulisseaux sont affleurant à la surface du plancher du véhicule qui ne présente aucune aspérité qui pourrait gêner au chargement de ce dernier. Comme les rails sont distants les uns des autres d'une valeur compatible avec l'écartement des moyens de fixation prévus sous chaque siège, l'utilisateur dispose d'un nombre satisfaisant de combinaisons d'emplacements pour les sièges, ce qui confère une grande liberté théorique d'aménagement du véhicule.

Cependant, la contrainte principale qui limite en fait cette liberté tient aux ceintures de sécurité. A la figure 1, on a représenté ces ceintures sous les références C21 et C22 pour le siège 102, C21 correspondant à la sangle ventrale et C22 à la sangle pectorale, C41 et C42 pour le siège 104, etc. Le siège 103 dans sa position centrale ne peut comporter qu'une ceinture de sécurité avec une seule sangle ventrale C31. D'une manière classique, la sangle ventrale de chaque ceinture est reliée au siège lui-même en des points situés de chaque coté de l'assise de ce siège (ces points étant eux-mêmes portés par des éléments de structure du siège liés aux coulisseaux) . La sangle pectorale, qui est celle la plus sollicitée en cas de choc, est toujours reliée à un point de la structure du véhicule (notamment au niveau des montants latéraux renforcés de la carrosserie de ce dernier). Comme ce point doit toujours être à l'arrière du siège correspondant, seule une partie de toutes les positions possibles de siège n'est utilisable avec une ceinture correctement disposée.

De plus, les sièges situés dans le milieu du véhicule ne peuvent bénéficier que d'une sangle ventrale, ce qui est loin de constituer une solution satisfaisante pour la sécurité du passager.

La présente invention a pour objet un équipement de sécurité qui, dans les véhicules de type monospaces notamment, ne constitue pas une limitation aux diverses possibilités de mise en place des sièges dans la partie arrière de l'habitacle de ces véhicules. Cet équipement confère en outre une sécurité identique au passager quelle que soit l'endroit où son siège est disposé dans le véhicule. Cet équipement enfin est entièrement démontable aisément, et de préférence avec le siège, ne laissant subsister dans l'habitacle aucun moyen résiduel qui constituerait une gène ou un obstacle au chargement du véhicule dépourvu de sièges.

L'objet de l'invention est donc un équipement de sécurité pour passager d'un véhicule automobile comportant un siège avec une assise et un dossier, au moins un rail solidaire du plancher du véhicule, au moins un coulisseau monté réglable en position le long du rail et possédant des moyens de fixation démontables du siège, une ceinture de sécurité comprenant au moins une sangle ventrale dont les extrémités sont reliées au moins indirectement au plancher du véhicule de chaque côté de l'assise du siège et au moins une sangle pectorale s'étendant depuis la sangle ventrale jusqu'à un point d'attelage solidaire du véhicule.

Selon l'invention, le point d'attelage de la sangle pectorale est porté par une navette logée à coulissement dans le rail susdit à l'arrière du coulisseau.

Ainsi, en cas de choc, les efforts auxquels est soumise la ceinture sont repris au point d'attelage de la sangle pectorale, par la navette qui est associée aux rails de coulissement, c'est-à-dire au plancher du véhicule. Ce point d'attelage possède toutes les qualités requises : il est lié à la structure du véhicule, il est à l'arrière du siège et il est "mobile" avec le siège si bien qu'il ne constitue plus une entrave à la liberté d'aménagement du véhicule.

Selon une caractéristique avantageuse de l'invention, l'équipement de sécurité comprend au moins un guide de la sangle pectorale situé au sommet du dossier du siège et solidaire de ce dernier. En cas de choc, la sangle pectorale exerce certes des efforts sur le dossier du siège, mais ces efforts ont une composante agissant en compression du dossier, de sorte qu'il peut ne pas être nécessaire de renforcer ce dossier ni ses moyens de liaison réglable à l'assise du siège.

Dans un mode d'exécution avantageux, la navette et le coulisseau sont en une seule pièce.

Bien entendu, la fixation de la sangle pectorale à la navette susdite sera avantageusement démontable. On pourra ainsi retirer siège et ceinture ensemble ou séparément, laissant le plancher du véhicule libre de toute aspérité.

Dans un mode de réalisation particulier, la sangle pectorale est en forme de baudrier s'étendant entre l'un des points de liaison de la sangle ventrale à l'assise du siège et la navette susdite en passant par le guide qui est situé au voisinage de l'extrémité latérale du sommet du dossier opposée au coté du siège portant le point commun de liaison de la sangle ventrale et du baudrier à l'assise du siège.

Dans un autre mode de réalisation particulier, la sangle pectorale comporte deux branches en forme de harnais, et le dossier du siège comporte deux guides situés au voisinage des extrémités latérales de ce dossier. Selon une autre caractéristique de l'invention,

la sangle pectorale comporte au voisinage de son attelage à la navette un dévidoir autobloquant.

Avantageusement encore, le dévidoir est monté sur une platine assujettie au siège et attelée de façon démontable à la navette.

Enfin, les points d'attelage de la sangle ventrale pourront être portés, soit par l'armature de l'assise du siège, soit par une navette logée à coulissement dans le rail.

D'autres caractéristiques et avantages de l'invention apparaîtront à la lecture de la description qui suit de modes de réalisation particuliers, donnés à titre d'exemples non limitatifs.

Il sera fait référence aux dessins en annexe, parmi lesquels :
- la figure 1 illustre schématiquement un véhicule équipé de sièges à emplacement variable ;
- la figure 2 est une vue schématique en perspective éclatée d'un équipement de sécurité conforme à l'invention ;
- la figure 3 est une vue analogue à la figure 2 illustrant une première variante de réalisation de l'invention ;
- la figure 4 est une vue schématique en perspective d'un équipement de sécurité selon une seconde variante de réalisation de l'invention ;
- la figure 5 est une vue schématique en perspective d'un équipement de sécurité selon une troisième variante de réalisation de l'invention.

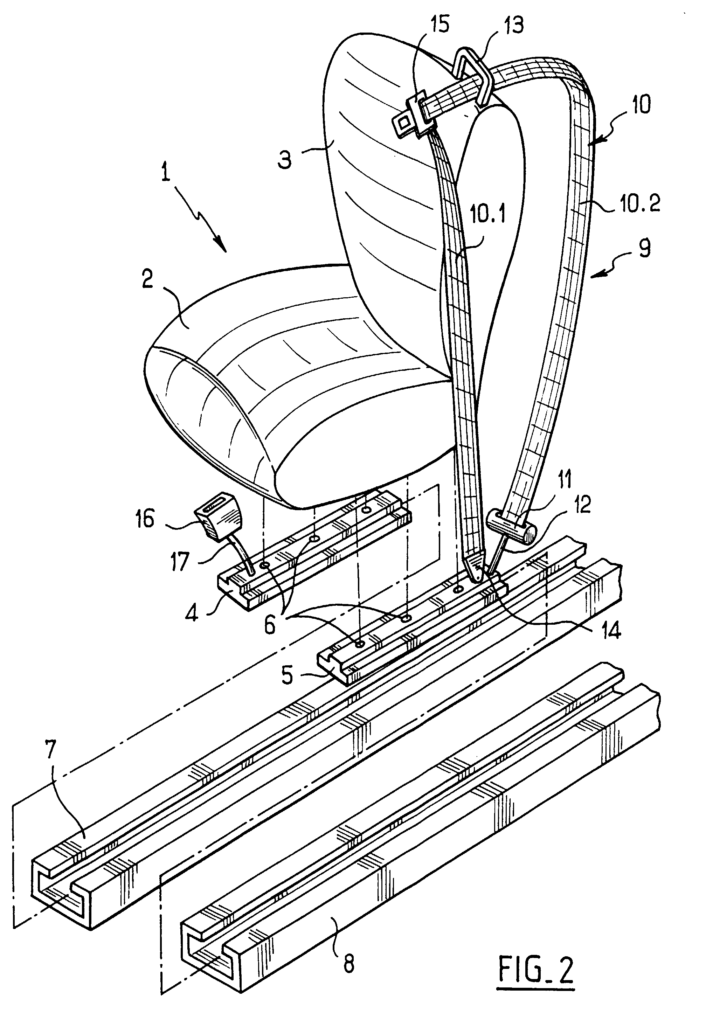

En référence à la figure 2, un siège coulissant, désigné par la référence générale 1, comporte une assise 2 et un dossier 3.

L'assise 2 est équipée inférieurement de deux coulisseaux 4, 5 présentant des moyens 6 pour leur fixation amovible à l'armature (non visible à la figure) de l'assise 2. Ces moyens sont connus en eux-mêmes et les plus simples d'entre eux sont des orifices dans lesquels des pions de l'assise du siège peuvent être introduits et verrouillés. Les coulisseaux 4, 5 sont ici constitués par de simples profilés à section en forme de T renversé et sont engagés dans des rails associés 7, 8 constitués par des profilés à section en forme de C complémentaire de celle des coulisseaux 4, 5. Ces rails 7 et 8 sont implantés dans le plancher intérieur (non représenté) du véhicule. Le siège 1 est ainsi monté coulissant sur le plancher du véhicule. Le détail de ce montage, qui met en particulier en oeuvre des moyens de blocage du siège permettant un réglage en position le long des rails, est bien connu en lui-même et ne sera donc pas davantage décrit.

Au siège 1 est associée une ceinture de sécurité 9 dont le montage est réalisé conformément à l'invention. Cette ceinture comporte une courroie de maintien 10 dont une extrémité est associée à un dévidoir 11 à enrouleur auto-bloquant, à l'intérieur duquel la courroie 10 est enroulable. Ce dévidoir 11 est attelé, par l'intermédiaire d'une tige 12 démontable, à l'extrémité arrière du coulisseau 5. La courroie 10 traverse un guide 13 équipant le sommet du dossier 3 du siège 1 et est attelée, à son extrémité opposée au dévidoir 11, à l'extrémité arrière du coulisseau 5 au moyen d'une patte de fixation 14. Le guide 13 est disposé au droit du coulisseau 5, c'est-à-dire du côté du siège opposé à celui duquel est situé le boîtier d'attache 16.

La courroie 10 est de plus équipée d'une boucle de verrouillage 15 mobile le long de cette courroie et destinée à coopérer avec un boîtier d'attache 16 dans lequel elle est encliquetable. Ce boîtier d'attache 16 est attelé, par l'intermédiaire d'une tige souple 17.

En configuration d'utilisation, c'est-à-dire lorsque la boucle de verrouillage 15 est engagée dans le boîtier d'attache 16, la courroie de maintien 10 se compose de deux portions ou sangles situées de part et d'autre de la boucle de verrouillage 15. On distingue ainsi une sangle ventrale 10.1 dont une extrémité est reliée au coulisseau 4 par l'intermédiaire de la boucle 15 et du boîtier 16 et dont l'extrémité opposée est reliée au coulisseau 5 par la patte 14, et une sangle pectorale 10.2 formant un baudrier, dont l'extrémité commune avec la sangle ventrale 10.1 est reliée au coulisseau 4 par l'intermédiaire de l'attache 15 et du boîtier 16 et dont l'autre extrémité est attelée à l'extrémité arrière du coulisseau 5 par l'intermédiaire du dévidoir 11 et de la tige démontable 12.

Grâce à la structure qui vient d'être décrite, on a réalisé un siège coulissant de véhicule à ceinture de sécurité embarquée dans lequel les points d'attache de la ceinture, et en particulier le point d'attache arrière de la sangle pectorale 10.2 (c'est-à-dire le dévidoir 11), sont assujettis au plancher du véhicule par l'intermédiaire des coulisseaux 4 et 5. De ce fait, les efforts encaissés par la courroie 10, notamment en cas de choc, sont repris principalement par les rails 7, 8 associés au plancher du véhicule et ne font donc intervenir que secondairement le siège 1 lui-même, ce qui permet de limiter les efforts encaissés par l'armature du siège. En outre, la constitution et la fabrication de la ceinture sont simples et peu coûteuses.

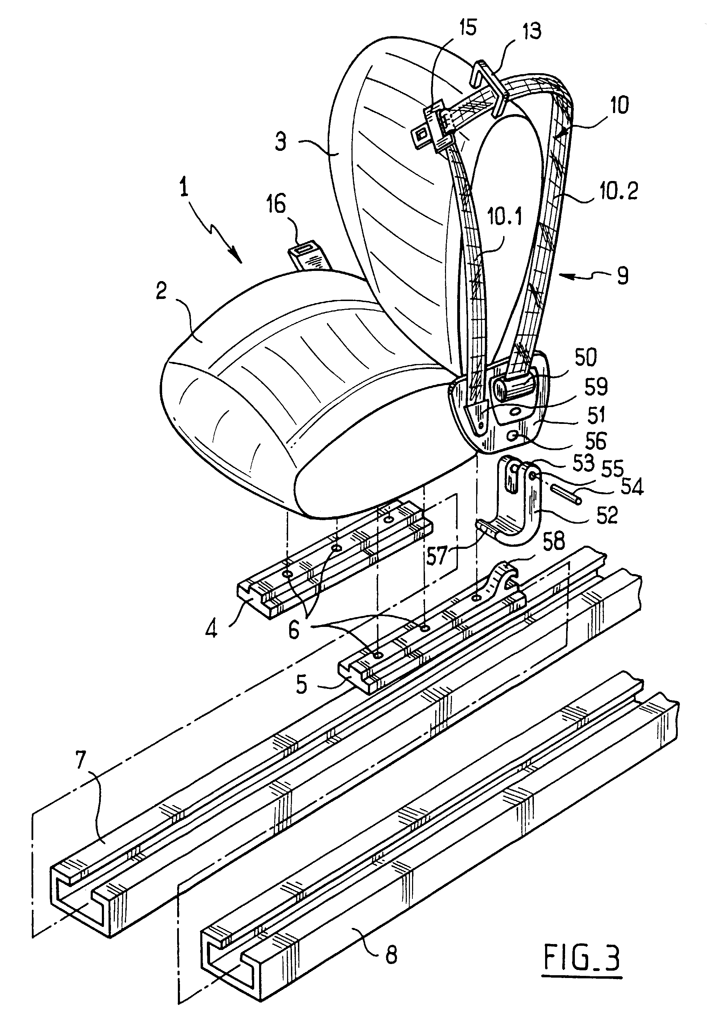

A la figure 3, on a représenté une première variante de réalisation d'un dispositif de sécurité conforme à l'invention. Cette variante se différencie du mode de réalisation précédemment décrit en référence à la figure 2 essentiellement par le mode de liaison des deux extrémités de la courroie 9 au coulisseau 5. En l'espèce, l'extrémité arrière de la sangle pectorale 10.2 est associée à un dévidoir 50 qui est fixé sur une platine 51 disposée sur les côtés et à l'arrière de l'assise 2 du siège 1. De même, l'extrémité opposée de la courroie 9, qui correspond à l'extrémité fixe de la sangle ventrale 10.1, est fixée à la platine 51 par l'intermédiaire d'une patte de fixation 59. La platine 51 est portée par l'armature du siège.

La platine 51 est attelée à l'extrémité arrière du coulisseau 5 par l'intermédiaire d'un crochet 52 qui possède une extrémité supérieure 53 en forme de fourche articulé à la platine 51 par un axe 54 engagée dans un perçage 55 de la fourche 53 et un trou 56 de l'extrémité inférieure de la platine 51. A son extrémité inférieure, le crochet 52 possède une extrémité coudée 57 qui coopère avec une attache 58 en forme de C ménagée sur l'extrémité arrière du coulisseau 5.

D'autre part, le boîtier d'attache 16 est ici attelé à l'armature de l'assise 2 du siège 1 et non pas au coulisseau 4 comme cela était le cas dans le mode de réalisation précédemment décrit en référence à la figure 3.

Ainsi, lors du démontage du siège 1, il suffit de désengager le crochet 52 de sa liaison avec l'attache 58 du coulisseau 5 pour désolidariser la ceinture du plancher du véhicule, la platine 51 restant attachée au siège 1.

A la figure 4, on a représenté schématiquement en perspective une première variante de réalisation d'un dispositif de sécurité conforme à l'invention. La ceinture 9 équipant le siège 1 possède comme précédemment une partie ventrale 10.1 et une partie pectorale 10.2 en forme de baudrier. L'extrémité arrière de la partie pectorale 10.2 est ici attelée, par l'intermédiaire du dévidoir 11, à une navette 20 indépendante des coulisseaux 4 et 5, montée à coulissement dans le rail 7 à l'aplomb duquel est disposé le guide 13.

D'autre part, l'extrémité avant de la sangle pectorale 10.2, commune avec la sangle ventrale 10.1, est reliée, par l'intermédiaire de la boucle de verrouillage 15, à un boîtier d'attache 21 qui est ici directement attelé à la structure de l'assise 2 du siège 1, du côté du siège opposé à celui où sont situés le dévidoir 11 et le guide 13. L'extrémité opposée de la sangle ventrale 10.1 est attelée, par l'intermédiaire d'une patte de fixation 22, directement à l'armature de l'assise 2 du siège 1.

A la figure 5, on a représenté schématiquement en perspective une seconde variante de réalisation d'un dispositif de sécurité conforme à l'invention. Le siège 1, qui est ici en vue arrière, est équipé d'une ceinture de sécurité 30 du type à harnais. Cette ceinture se compose d'une sangle ventrale qui comporte deux branches 31, 32 dont les extrémités opposées sont reliées, par l'intermédiaire de pattes de fixation 33, 34, à l'armature de l'assise 2 du siège 1, et d'une sangle pectorale double comportant deux branches 35, 36 dont les extrémités arrières sont attelées, par l'intermédiaire d'un dévidoir autobloquant 37, 38 à des navettes 39, 40 logées à coulissement dans les rails 7, 8, à l'arrière des coulisseaux 4, 5 auxquels le siège 1 est fixé. Les quatre branches 31, 32, 35, 36 de la ceinture 30 sont réunies par un système d'attache centrale 41 connu en lui-même.

Les branches 35, 36 de la sangle pectorale double sont guidées au sommet du dossier 3 par deux guides 42, 43 disposés à chacune des deux extrémités du sommet du dossier 3, à l'aplomb des rails 7 et 8.

L'invention n'est pas limitée aux modes de réalisation qui viennent d'être décrits, mais englobe au contraire toute variante reprenant, avec des moyens équivalents, les caractéristiques essentielles de l'invention. Dans la description ci-dessus, on a décrit des systèmes dans lesquels un siège est fixé au plancher d'un véhicule par deux coulisseaux. L'invention bien entendu englobe des réalisations dans lesquelles un seul rail est mis en oeuvre pour la fixation d'un siège.

## Revendications

1. Equipement de sécurité pour passager d'un véhicule automobile comportant un siège (1) avec une assise (2) et un dossier (3), au moins un rail (7, 8) solidaire du plancher du véhicule, au moins un coulisseau (4, 5) monté réglable en position le long du rail (7, 8) et possédant des moyens de fixation démontables du siège (1), une ceinture de sécurité (9 ; 30) comprenant au moins une sangle ventrale (10.1 ; 31, 32) dont les extrémités sont reliées au moins indirectement au plancher du véhicule de chaque côté de l'assise du siège et au moins une sangle pectorale (10.2 ; 35, 36) s'étendant depuis la sangle ventrale (10.1 ; 31, 32) jusqu'à un point d'attelage solidaire du véhicule, caractérisé en ce que le point d'attelage de la sangle pectorale (10.2 ; 35, 36) est porté par une navette (5 ; 20 ; 39, 40) logée à coulissement dans le rail (8) susdit à l'arrière du coulisseau (5).

2. Equipement selon la revendication 1, caractérisé en ce qu'il comprend au moins un guide (13 ; 42, 43) de la sangle pectorale (10.2 ; 35, 36) situé au sommet du dossier (3) du siège (1) et solidaire de ce dernier.

3. Equipement selon la revendication 1 ou la revendication 2, caractérisé en ce que la navette et le coulisseau sont en une seule pièce (5).

4. Equipement selon l'une des revendications précédentes, caractérisé en ce que la fixation de la sangle pectorale (10.2 ; 35, 36) à la navette (5 ; 20 ; 39, 40) susdite est démontable.

5. Equipement selon l'une des revendications 2 à 4, caractérisé en ce que la sangle pectorale (10.2) est en forme de baudrier s'étendant entre l'un des points de liaison de la sangle ventrale (10.1) à l'assise (2) du siège (1) et la navette (5) susdite en passant par le guide (13) qui est situé au voisinage de l'extrémité latérale du sommet du dossier (3) opposée au coté du siège portant le point commun de liaison de la sangle ventrale (10.1) et du baudrier à l'assise (2) du siège (1).

6. Equipement selon l'une des revendications 2 à 4, caractérisé en ce que la sangle pectorale comporte deux branches (35, 36) en forme de harnais, et en ce que le dossier (3) du siège (1) comporte deux guides (42, 43) situés au voisinage des extrémités latérales de ce dossier.

7. Equipement selon l'une des revendications 2 à 6 dans lequel deux rails (7, 8) sont affectés à chaque siège (1) avec un coulisseau (4, 5) dans chaque rail, caractérisé en ce que le guide (13 ; 42, 43) de la sangle pectorale (10.2 ; 35, 36) porté par le sommet du dossier (3) est sensiblement à l'aplomb du rail correspondant.

8. Equipement selon l'une des revendications précédentes, caractérisé en ce que la sangle pectorale (10.2 ; 35, 36) comporte au voisinage de son attelage à la navette (5 ; 20 ; 39, 40) un dévidoir (11 ; 37, 38 ; 50) autobloquant.

9. Equipement selon la revendication 8, caractérisé en ce que le dévidoir (50) est monté sur une platine (51) assujettie au siège (1) et attelée de façon démontable à la navette (5).

10. Equipement selon l'une des revendications précédentes, caractérisé en ce qu'au moins l'un des points (14, 15 ; 59) de liaison de la sangle ventrale (10.1) au plancher du véhicule est porté par une navette (4, 5) logée à coulissement dans le rail (7, 8).
